# EUROPÄISCHE PATENTSCHRIFT

(11) **EP 2 936 939 B1**
(45) Veröffentlichungstag und Bekanntmachung des Hinweises auf die Patenterteilung: **02.03.2022**
(21) Anmeldenummer: 13814905.9
(22) Anmeldetag: 19.12.2013
(51) Int. Cl.: H05B 47/125, H05B 47/175, G01S 5/16

(54) **VERFAHREN ZUR ADRESSIERUNG VON LEUCHTEN UND SYSTEM ZUR BELEUCHTUNG EINES RAUMES**
METHOD FOR ADDRESSING OF LUMINAIRES AND SYSTEM FOR ILLUMINATION OF AN AREA
PROCÉDÉ POUR L'ADRESSAGE DES SOURCES LUMINEUSES ET SYSTÈME POUR ILLUMINATION D'UNE ZONE

(30) Priorität: 20.12.2012 DE 102012223966
(43) Veröffentlichungstag der Anmeldung: 28.10.2015
(73) Patentinhaber: Zumtobel Lighting GmbH, 6850 Dornbirn (AT)
(72) Erfinder: BÖHNEL, Michael, A-6850 Dornbirn (AT)
(74) Vertreter: Thun, Clemens
(86) Internationale Anmeldenummer: PCT/EP2013/077399
(87) Internationale Veröffentlichungsnummer: WO 2014/096198

(56) Entgegenhaltungen:
- EP-A1- 2 434 842
- EP-A2- 2 315 503
- EP-B1- 2 434 842
- WO-A1-2012/093110
- WO-A2-2009/010926
- DE-A1-102010 038 792
- GB-A- 2 418 482
- JP-A- H06 203 609
- US-A1- 2011 141 727

## Beschreibung

Die vorliegende Erfindung betrifft ein Verfahren zur Adressierung von Leuchten, wobei die Leuchten innerhalb eines Raumes angeordnet sind und ein System zur Beleuchtung eines Raumes, welches mehrere innerhalb des Raumes angeordnete Leuchten aufweist.

In größeren Räumen von Gebäuden, beispielsweise Großraumbüros, ist zumeist eine Vielzahl von Leuchten innerhalb eines Raumes angeordnet, die eine ausreichende Beleuchtung des Raumes sicherstellen. In den meisten Anwendungsfällen ist hierbei vorgesehen, dass die Leuchten nicht nur über einen einfachen Ein- und Ausschalter betätigt werden, sondern dass diese beispielsweise auch von einer Zentrale gesteuert werden können. Um eine Unterscheidung der einzelnen Leuchten vornehmen zu können, ist es daher erforderlich, jeder Leuchte eine entsprechende Betriebsadresse zuzuweisen.

Um eine vernünftige Steuerung der Leuchten durch beispielsweise eine Zentrale zu ermöglichen, ist es dann aber auch notwendig, dass die Position der einzelnen Leuchten innerhalb eines Raumes bekannt ist und nach Möglichkeit, die Betriebsadressen entsprechend der Position den Leuchten zugeordnet sind.

Um eine derartige positionsgebundene Zuordnung der Betriebsadressen zu ermöglichen, sind bereits verschiedene Lösungen bekannt. So ist beispielsweise bei einer Variante vorgesehen, dass die Leuchten jeweils einzeln ein entsprechendes Lichtsignal abgeben und sich somit identifizieren und dann durch einen Monteur oder Installateur die Position der Leuchte innerhalb des Raumes festgestellt wird. Anschließend kann dann der Monteur bzw. Installateur entweder selber der jeweiligen Leuchte eine Betriebsadresse zuordnen oder einer Zentrale die Position innerhalb des Raumes mitteilen, wobei dann die Zentrale die Zuweisung einer Betriebsadresse vornimmt.

Eine andere bisher bekannte Variante sieht vor, dass die Erfassung der Position über ein sogenanntes Inhouse-GPS-System erfolgt.

Bei einer dritten Variante werden alle Leuchten mit Hilfe einer externen Kamera erfasst und dann durch Auswertung des Bildes die Position jeder Leuchte ermittelt. Hierbei ist im Einzelnen vorgesehen, dass beispielsweise ein Monteur bzw. Installateur nach Montage der Leuchten an einer Decke eines Raumes sich in die Mitte des Raumes begibt und mit einer entsprechenden Kamera von unten ein Bild der Decke anfertigt, auf dem dann die jeweilige Position der Leuchten zu erkennen ist. Dabei kann dann zusätzlich wiederum vorgesehen sein, dass die Leuchten einzeln an- und abgeschaltet werden und dabei für jede angeschaltete Leuchte ein Bild von der gesamten Decke von unten angefertigt wird, wodurch dann erkannt werden kann, welche Leuchte an welcher Position in welchem Bild geleuchtet hat.

Bei allen Varianten ist aber zu beachten, dass zumindest teilweise ein Eingriff eines Monteurs bzw. Installateurs notwendig ist.

Des Weiteren ist aus der EP 2 434 842 A1 ein Verfahren zur Lokalisierung, ein Computerprogamm und eine Lokalisierungseinheit bekannt und aus der EP 2 315 503 A2 geht ein Verfahren und ein System zur Vergabe von Betriebsadressen für Lichtquellen oder Leuchten hervor.

Der vorliegenden Erfindung liegt dementsprechend die Aufgabe zugrunde, eine Alternative zu den bisher bekannten Adressierungsverfahren aufzuzeigen, die eine komfortable und automatische Zuweisung einer Betriebsadresse für eine große Anzahl an Leuchten innerhalb eines Raumes beispielsweise eines Großraumbüros ermöglicht.

Die Aufgabe wird durch ein Verfahren zur Adressierung von Leuchten gemäß Anspruch 1 und einem System zur Beleuchtung eines Gebiets gemäß Anspruch 4 gelöst. Vorteilhafte Weiterbildungen der Erfindung sind Gegenstand der abhängigen Ansprüche.

Erfindungsgemäß wird ein Verfahren zur Adressierung von Leuchten, die an einer Decke innerhalb eines Raumes angeordnet sind, vorgeschlagen, bei dem ein unterhalb jeder Leuchte liegender Bereich jeweils mit einer Kamera, die der entsprechenden Leuchte zugeordnet ist und in oder direkt an der Leuchte angeordnet ist, aufgenommen wird und eine Position jeder Leuchte innerhalb des Raumes aus durch den die Kameras erfassten Daten ermittelt wird, wobei aufgrund der ermittelten Position jeder Leuchte innerhalb des Raumes, jeder Leuchte eine Adresse zugewiesen wird, wobei die von den Kameras erfassten Daten an eine Zentrale übermittelt werden und die Zentrale die Position jeder Leuchte innerhalb des Raumes ermittelt und jeder Leuchte eine Adresse zuweist, wobei die von den Kameras erfassten Daten zu einer Gesamtansicht bzw. einem Gesamtbild des Raumes kombiniert werden und die Position jeder Leuchte innerhalb des Raumes mit Hilfe der von der jeweils zugehörigen Kamera erfassten Daten in Verbindung mit der Gesamtansicht des Raumes bestimmt wird, wobei die Leuchten, insbesondere einzeln, von der Zentrale an- und abgeschaltet werden und aus den erfassten Daten der Kameras jeweils ermittelt wird, aus welcher Richtung das Licht leuchtet, wobei zur Bestimmung der Position jeder Leuchte innerhalb des Raumes zusätzlich dann auch die ermittelten Richtungsinformationen verwendet werden, wobei aus den erfassten Daten einer Kamera einer Leuchte ermittelt wird, aus welcher Richtung das Licht der anderen Leuchten, insbesondere der benachbarten Leuchten, leuchtet und dabei ermittelt wird ob das Licht von links, rechts, vorne oder hinten leuchtet.

Außerdem wird auch noch ein System zur Beleuchtung eines Gebiets vorgeschlagen, welches mehrere innerhalb des Raumes angeordnete Leuchten aufweist, wobei jeder Leuchte eine Kamera zugeordnet ist, die in oder direkt an der Leuchte angeordnet ist und jeweils dazu ausgebildet ist, den unterhalb der entsprechende Leuchte liegenden Bereich aufzunehmen und das System dazu ausgebildet ist, die Adressierung der einzelnen Leuchten gemäß dem erfindungsgemäßen Verfahren vorzunehmen.

Im Gegensatz zu dem bereits bekannten Verfahren, bei dem eine externe Kamera beispielsweise in der Mitte des Raumes angeordnet wird und dann von unten ein Bild aller an einer Decke angeordneten Leuchten aufnimmt, ist nunmehr vorgesehen, dass jeder Leuchte eine Kamera zugeordnet ist, die den unterhalb der Leuchte liegenden Bereich aufnimmt/erfasst und dann auf Grundlage der erfassten Daten aller Kameras die Position jeder Leuchte bestimmt wird.

Vorzugsweise kann vorgesehen sein, dass die Kameras jeweils einen vergleichbar großen Bereich erfassen und jeweils eine vergleichbare Blickrichtung aufweisen. Vorteilhafterweise wäre es auch möglich, dass bei der Ermittlung, aus welcher Richtung das Licht leuchtet, das Blickfeld bzw. der Erfassungsbereich der jeweiligen Kamera verändert bzw. eingeschränkt wird.

Vorzugsweise kann außerdem auch noch vorgesehen sein, dass die Kamera eine Weitwinkeloptik oder ein sog. Fischauge aufweist.

Nachfolgend soll die Erfindung anhand von Ausführungsbeispielen und der beiliegenden Zeichnung näher erläutert werden. Es zeigen:

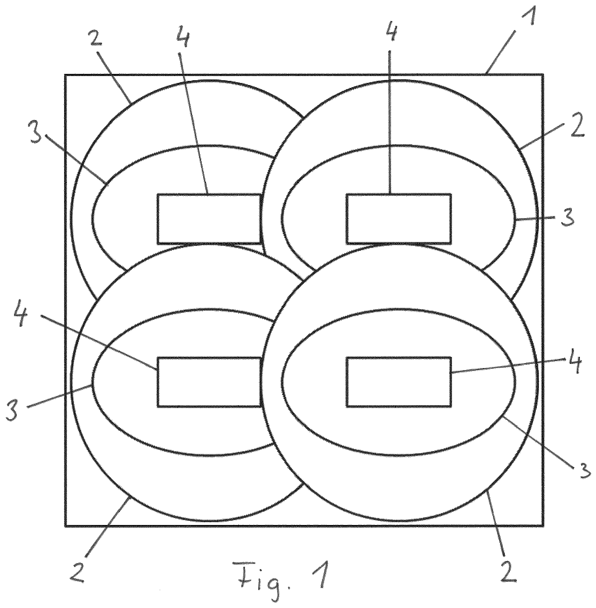

- Figur 1: schematische Darstellung eines Raumes mit mehreren Leuchten.

Als Anwendungsbeispiel für die vorliegende Erfindung wird nachfolgend eine Anordnung von Leuchten innerhalb eines Raumes beschrieben, wobei diesen Leuchten Adressen zugeordnet werden sollen. Das Konzept wäre allerdings in gleicher Weise auch in der Außenbeleuchtung, beispielsweise bei der Straßenbeleuchtung oder der Beleuchtung von Parkplätzen nutzbar. Bei einer derartigen Außenanwendung wäre evtl. eine gerichtete oder weitere Bilderfassung durch die Kameras sinnvoll.

In Figur 1 ist schematisch ein Raum 1 dargestellt, in dem vier Leuchten 4 zur Beleuchtung des Raumes 1 an der Decke angebracht sind. Die Leuchten 4 sind dabei, wie aus Figur 1 hervorgeht, gleichmäßig in dem Raum 1 verteilt. Zusätzlich ist in Figur 1 auch noch für jede Leuchte 4 jeweils das Lichtfeld 3, also der Bereich der von Leuchte 4 beleuchtet wird, gezeigt.

Erfindungsgemäß ist nunmehr vorgesehen, dass jeder Leuchte 4 eine Kamera zugeordnet ist, die jeweils den unterhalb der entsprechenden Leuchte 4 liegenden Bereich erfasst, wobei dieser Bereich in Figur 1 jeweils als Kamerafeld 2 dargestellt ist. Die erfassten Daten sind somit ein Bild des jeweils unterhalb der entsprechenden Leuchte 4 liegenden Bereichs. Wie aus Figur 1 ersichtlich, ist dabei vorgesehen, dass durch die Kamerafelder 2 der Kameras aller vier Leuchten 4 im Wesentlichen der gesamte unter den Leuchten 4 liegende Raum 1 erfasst wird. Außerdem ist auch anzumerken, dass in Figur 1 die durch die Kameras erfassten Kamerafelder 2 einen größeren Bereich abdecken als die Lichtfelder 3. Allerdings wäre es auch möglich, dass die Kamerafelder 2 und die Lichtfelder 3 gleich groß sind und den gleichen Bereich abdecken oder sogar, dass die Kamerafelder 2 kleiner sind als die Lichtfelder 3.

Die den Leuchten 4 zugeordneten Kameras sind dabei jeweils in oder direkt an den Leuchten 4 angeordnet und weisen vorzugsweise ein Weitwinkelobjektiv oder ein Fischaugenobjektiv auf. Außerdem ist auch vorgesehen, wie auch aus Figur 1 hervorgeht, dass die Kameras der Leuchten 4 jeweils einen vergleichbaren Bereich erfassen und auch jeweils eine vergleichbare Blickrichtung aufweisen. Dies ergibt sich beispielsweise durch die Verwendung identischer Kameras und Optiken in allen Leuchten 4, sowie jeweils der gleichen Positionierung der Kameras an den Leuchten 4.

Des Weiteren ist dann vorgesehen, dass die erfassten Daten bzw. Bilder der einzelnen Kameras an eine Zentrale übermittelt werden und diese Zentrale dann die Position jeder Leuchte 4 innerhalb des Raumes 1 aus den durch die Kameras erfassten Daten bzw. Bilder ermittelt. Aufgrund der ermittelten Position kann dann die Zentrale jeder Leuchte 4 eine Adresse zuweisen.

Die Bestimmung bzw. Ermittlung der Position jeder Leuchte 4 innerhalb des Raumes 1 erfolgt dabei dadurch, dass aus den erfassten Daten bzw. einzelnen Bildern der Kameras eine Gesamtansicht bzw. ein Gesamtbild des Raumes 1 erstellt bzw. kombiniert wird. Diese Gesamtansicht gibt dann eine Ansicht des Raumes 1 aus Sicht der Leuchten 4 wieder. Zur Erzeugung einer derartigen Gesamtansicht aus einzelnen Bildern sind bereits verschiedene Techniken hinlänglich bekannt, weshalb hier nicht genauer darauf eingegangen werden soll. Lediglich beispielhaft wird auf die sogenannten Photo-Stitcher zur Erzeugung von Panoramabildern verwiesen.

Mit Hilfe der Gesamtansicht in Verbindung mit den einzelnen Bildern der jeweiligen Kameras ist es dann möglich, dass die Position jeder Leuchte 4 innerhalb des Raumes 1 bestimmt wird. Dies ist dadurch möglich, dass bekannt ist, welche Leuchte 4, bzw. die entsprechende Kamera, welchen Teilbereich zur Gesamtansicht beigetragen hat, wodurch dann die Position der Leuchte 4 entsprechend ermittelt bzw. bestimmt werden kann. Aufgrund der Positionsinformationen jeder Leuchte 4 ist es dann möglich, den Leuchten 4 jeweils entsprechende Betriebsadressen zuzuweisen.

Zusätzlich zur Erzeugung einer Gesamtansicht erfolgt die Bestimmung der Position jeder Leuchte 4 auch dadurch, dass die Leuchten 4 an- und abgeschaltet werden und aus den erfassten Daten bzw. Bildern der Kameras jeweils ermittelt wird, aus welcher Richtung das Licht leuchtet bzw. in welche Richtung jeweils die Lichtabgabe erfolgt, wobei mit Hilfe der Richtungsinformationen dann die Position jeder Leuchte 4 innerhalb des Raumes 1 bestimmt wird. Durch die Anordnung der Kameras an bzw. in den Leuchten 4 wird von den Kameras somit insbesondere dann das Licht der anderen Leuchten 4, bevorzugt der benachbarten Leuchten 4, aufgenommen, wodurch bestimmt werden kann, aus welcher Richtung jeweils das Licht leuchtet. Hierdurch ist es dann beispielsweise möglich, dass eine Aussage getroffen werden kann, ob das Licht von links, rechts, vorne oder hinten leuchtet. Mit Hilfe dieser Informationen ergibt sich dann eine relative Ordnung der Leuchten 4 im Raum 1, die eine Zuordnung der Betriebsadressen ermöglicht.

So werden die Leuchten 4 zur Bestimmung bzw. Ermittlung der Richtungsinformationen beispielsweise einzeln von einer Zentrale an- und abgeschaltet, wodurch der Zentrale dann bekannt ist, wann eine Leuchte 4 an- bzw. abgeschaltet war und somit die Zuordnung zu den erfassten Daten bzw. Bildern der Kameras möglich wird.

In Figur 1 wäre es beispielsweise möglich, dass die Leuchte 4, welche in Figur 1 links oben dargestellt ist, angeschaltet und alle anderen Leuchten 4 abgeschaltet sind. Aus den Bildern der Kameras der anderen Leuchten 4 kann dann ermittelt werden, aus welcher Richtung das Licht leuchtet. So ist aus dem Bild der Kamera der Leuchte 4, welche rechts oben angeordnet ist, zu erkennen, dass das Licht von links leuchtet. Aus dem Bild der Kamera der Leuchte 4, welche links unten in Figur 1 angeordnet ist, ist demgegenüber zu erkennen, dass das Licht von vorne leuchtet. Ähnliches gilt dann auch für das Bild der Kamera der Leuchte 4, welche rechts unten angeordnet ist.

Nachdem dann die Leuchte 4, welche links oben angeordnet ist, wieder abgeschaltet worden ist, kann der gleiche Vorgang für die anderen Leuchten 4 entsprechend vorgenommen werden. Aus der Gesamtheit der Informationen können dann die Positionen der einzelnen Leuchten 4 bestimmt werden. Als Alternative zur An- bzw. Abschaltung jeder einzelnen Leuchte 4 kann auch die Verwendung eines speziellen Algorithmus vorgesehen sein, bei dem dann möglicherweise auch mehrere Leuchten 4 gleichzeitig an- bzw. abgeschaltet werden.

Zusätzlich ist es dann auch noch möglich, dass das Blickfeld bzw. der Betrachtungswinkel der Kamera verändert bzw. eingeschränkt wird, wodurch die Kameras jeweils nur noch direkt Licht der angrenzenden Leuchten 4 erfassen. Außerdem kann durch das Verändern des Erfassungsbereichs bzw. des Blickfeldes einer Kamera auch noch genauer festgestellt werden, in welcher Richtung ausgehend von einer bestimmten Leuchte 4 sich diejenige Leuchte 4 befindet, welche gerade Licht abgibt.

Beim An- bzw. Abschalten der Leuchten 4 kann außerdem auch vorgesehen sein, dass dieses zufällig geschieht oder aber dass von der Zentrale gezielt an- bzw. abgeschaltet wird.

Die zuvor beschriebene Bestimmung der Position jeder Leuchte 4 mit Hilfe der Gesamtansicht des Raumes wird dann mit der Bestimmung der Position jeder Leuchte 4 mit Hilfe der Richtungsinformationen durch das An- bzw. Abschalten von Leuchten 4 kombiniert, wobei dann die Position jeder Leuchte 4 sowohl aus den Bildern in Verbindung mit der Gesamtansicht als auch aus den ermittelten Richtungsinformationen bestimmt bzw. ermittelt wird.

Dies eignet sich beispielsweise insbesondere dann, wenn die Leuchten in Räumen angeordnet sind, welche sich nicht wesentlich unterscheiden bzw. eine regelmäßige Anordnung von Arbeitsplätzen oder dergleichen aufweisen.

Des Weiteren kann es außerdem auch sinnvoll sein, Plandaten, wie Fenster, Möbel, Struktur/Farbinformationen von Wand/Flächen/Böden des Raumes mit zu verwenden und mit den einzelnen Bildern der Kameras oder der Gesamtansicht des Raumes abzugleichen und somit zusätzliche Informationen über die Positionierung jeder Leuchte zu erhalten. Wesentlich ist, dass jeder Leuchte eine Kamera zugeordnet ist, die den Bereich unterhalb der Leuchte erfasst bzw. aufnimmt.

## Patentansprüche

1. Verfahren zur Adressierung von Leuchten (4), wobei die Leuchten (4) an einer Decke innerhalb eines Raumes (1) angeordnet sind,
**dadurch gekennzeichnet,**
**dass** ein unterhalb jeder Leuchte (4) liegender Bereich jeweils mit einer Kamera, die der entsprechenden Leuchte (4) zugeordnet ist und in oder direkt an der Leuchte (4) angeordnet ist, aufgenommen wird und eine Position jeder Leuchte (4) innerhalb des Raumes (1) aus durch die Kameras erfassten Daten ermittelt wird und aufgrund der ermittelten Position jeder Leuchte (4) innerhalb des Raumes (1), jeder Leuchte (4) eine Adresse zugewiesen wird,
wobei die von den Kameras erfassten Daten an eine Zentrale übermittelt werden und die Zentrale die Position jeder Leuchte (4) innerhalb des Raumes (1) ermittelt und jeder Leuchte (4) eine Adresse zuweist,
wobei die von den Kameras erfassten Daten zu einer Gesamtansicht bzw. einem Gesamtbild des Raumes (1) kombiniert werden und die Position jeder Leuchte (4) innerhalb des Raumes (1) mit Hilfe der von der jeweils zugehörigen Kamera erfassten Daten in Verbindung mit der Gesamtansicht des Raumes (1) bestimmt wird;
wobei die Leuchten (4), insbesondere einzeln, von der Zentrale an- und abgeschaltet werden und aus den erfassten Daten der Kameras jeweils ermittelt wird, aus welcher Richtung das Licht leuchtet,
wobei zur Bestimmung der Position jeder Leuchte (4) innerhalb des Raumes (1) zusätzlich dann auch die ermittelten Richtungsinformationen verwendet werden,
wobei aus den erfassten Daten einer Kamera einer Leuchte (4) ermittelt wird, aus welcher Richtung das Licht der anderen Leuchten (4), insbesondere der benachbarten Leuchten (4), leuchtet und dabei ermittelt wird ob das Licht von links, rechts, vorne oder hinten leuchtet.

2. Verfahren nach Anspruch 1,
wobei die Kameras jeweils einen vergleichbar großen Bereich (2) erfassen und jeweils eine vergleichbare Blickrichtung aufweisen.

3. Verfahren nach einem der Ansprüche 1-2,
wobei bei der Ermittlung, aus welcher Richtung das Licht leuchtet, der Erfassungsbereich der jeweiligen Kamera verändert bzw. eingeschränkt wird.

4. System zur Beleuchtung eines Raumes (1), welches mehrere an einer Decke innerhalb des Raumes (1) angeordnete Leuchten (4) aufweist,
**dadurch gekennzeichnet,**
**dass** jeder Leuchte (4) eine Kamera zugeordnet ist, die in oder direkt an der Leuchte (4) angeordnet ist und jeweils dazu ausgebildet ist, den unterhalb der entsprechende Leuchte (4) liegenden Bereich (2) aufzunehmen und das System dazu ausgebildet ist, die Adressierung der einzelnen Leuchten (4) gemäß einem der Verfahren der Ansprüche 1-3 vorzunehmen.

5. System nach Anspruch 4,
wobei die Kameras jeweils eine Weitwinkeloptik oder ein Fischaugenobjektiv aufweisen.

## Claims

1. Method for addressing luminaires (4), wherein the luminaires (4) are arranged on a ceiling within an area (1),
**characterized in that**
a region beneath each luminaire (4) is respectively recorded with a camera which is associated with the corresponding luminaire (4) and arranged in or directly on the luminaire (4), and a position of each luminaire (4) within the area (1) is determined from data acquired by the cameras, and an address is assigned to each luminaire (4) on the basis of the determined position of each luminaire (4) within the area (1),
wherein the data acquired by the cameras are transmitted to a control center, and the control center determines the position of each luminaire (4) within the area (1) and assigns an address to each luminaire (4),
wherein the data acquired by the cameras are combined into an overall view or an overall image of the area (1), and the position of each luminaire (4) within the area (1) is determined with the aid of the data acquired by the respectively associated camera in conjunction with the overall view of the area (1);
wherein the luminaires (4) are, in particular individually, switched on and off by the control center, and, from the acquired data of the cameras, it is respectively determined from which direction the light is shining,
wherein the determined directional information is then additionally also used in order to determine the position of each luminaire (4) within the area (1),
wherein, from the acquired data of a camera of a luminaire (4), it is determined from which direction the light of the other luminaires (4), in particular of the adjacent luminaires (4), is shining, and it is thereby determined whether the light is shining from the left, right, front, or rear.

2. Method according to Claim 1,
wherein the cameras respectively capture a comparably large region (2), and respectively have a comparable viewing direction.

3. Method according to one of Claims 1-2,
wherein, in determining the direction from which the light is shining, the acquisition region of the respective camera is changed or restricted.

4. System for illuminating an area (1), which has a plurality of luminaires (4) arranged on a ceiling within the area (1),
**characterized in that**
a camera, arranged in or directly on the luminaire (4), is associated with each luminaire (4) and is respectively designed to record the region (2) beneath the corresponding luminaire (4), and the system is designed to effect the addressing of the individual luminaires (4) in accordance with one of the methods of Claims 1-3.

5. System according to Claim 4,
wherein the cameras respectively have a wide-angle lens or a fish-eye lens.

## Revendications

1. Procédé pour l'adressage de luminaires (4), les luminaires (4) étant agencés sur un plafond à l'intérieur d'une zone (1),
**caractérisé en ce**
**qu'**une zone se trouvant au-dessous de chaque luminaire (4) est respectivement enregistrée avec une caméra, qui est associée au luminaire (4) correspondant et est agencée dans ou directement sur le luminaire (4) et une position de chaque luminaire (4) à l'intérieur de la zone (1) est déterminée à partir des données détectées par les caméras et, sur la base de la position déterminée de chaque luminaire (4) à l'intérieur de la zone (1), chaque luminaire (4) se voyant attribuer une adresse,
dans lequel les données détectées par les caméras sont transmises à une centrale et la centrale détermine la position de chaque luminaire (4) à l'intérieur de la zone (1) et attribue une adresse à chaque luminaire (4),
dans lequel les données détectées par les caméras sont combinées à une vue globale ou une image globale de la zone (1) et la position de chaque luminaire (4) à l'intérieur de la zone (1) est spécifiée à l'aide des données détectées par la caméra respectivement associée en liaison avec la vue globale de la zone (1) ;
dans lequel les luminaires (4) sont allumés et éteints, en particulier individuellement, par la centrale et, à partir des données détectées des caméras, la direction d'éclairage de la lumière étant déterminée,
dans lequel, pour spécifier la position de chaque luminaire (4) à l'intérieur de la zone (1), en outre, les informations de direction déterminées sont également utilisées,
dans lequel, à partir des données détectées d'une caméra d'un luminaire (4), il est déterminé à partir de quelle direction la lumière des autres luminaires (4), en particulier des luminaires voisins (4), éclaire et, ainsi, il est déterminé si la lumière éclaire depuis la gauche, la droite, l'avant ou l'arrière.

2. Procédé selon la revendication 1,
dans lequel les caméras détectent respectivement une zone (2) de taille comparable et présentent respectivement une direction de visée comparable.

3. Procédé selon l'une quelconque des revendications 1-2,
dans lequel, lors de la détermination de la direction dans laquelle la lumière éclaire, la zone de détection de la caméra respective est modifiée ou limitée.

4. Système d'éclairage d'une zone (1), qui présente plusieurs luminaires (4) agencés sur un plafond à l'intérieur d'une zone (1),
**caractérisé en ce**
**qu**'une caméra est associée à chaque luminaire (4), qui est agencée dans ou directement sur le luminaire (4) et est respectivement conçue pour enregistrer la zone (2) se trouvant au-dessous du luminaire (4) correspondant et le système est conçu pour entreprendre l'adressage des luminaires individuels (4) conformément à l'un des procédés des revendications 1-3.

5. Système selon la revendication 4,
dans lequel les caméras présentent respectivement une optique grand angle ou un objectif ultra-grand angle.
